# EUROPEAN PATENT SPECIFICATION

(11) **EP 3 023 011 B1**
(45) Date of publication and mention of the grant of the patent: **31.05.2017**
(21) Application number: 13888417.6
(22) Date of filing: 24.06.2013
(51) Int. Cl.: A23L 29/00, A23L 13/40, A23L 7/109, A23L 13/60, A21D 2/36, A23L 13/50

(54) **NATURAL BINDER DERIVED FROM LIPOPHILIC PITH FIBERS (GROUND STEM OR STALK INTERNAL FIBERS) SEPARATED FROM SUNFLOWER STEMS OR STALKS FOR PROCESSED FOODS AND PROCESSED FOODS CONTAINING THE SAME.**
AUS LIPOPHILEN MARKRÖHREN (GRUNDFASERN AUS DEM INNEREN STAMM) GEWONNENES NATÜRLICHES BINDUNGSHILFSMATERIAL AUS SONNENBLUMEN FÜR VERARBEITETE FLEISCHERZEUGNISSE
MATÉRIAU AUXILIAIRE DE LIAISON NATUREL, DÉRIVÉ DE FIBRES DE MOËLLE LIPOPHILES (FIBRES INTERNES DE TIGES BROYÉES) ISSUES DE TIGES DE TOURNESOL, POUR DES ALIMENTS DE VIANDE TRANSFORMÉS

(43) Date of publication of application: 25.05.2016
(73) Proprietor: Mottainai Biomass Research Corporation, Chuo-ku, Tokyo 104-0041 (JP)
(72) Inventor: TAKAMURA, Yoshio, Tokyo 104-0041 (JP)
(74) Representative: Denison, Christopher Marcus
(86) International application number: PCT/JP2013/067239
(87) International publication number: WO 2014/207805

(56) References cited:
- WO-A1-2013/099364
- CN-A- 102 742 855
- DE-A1-102009 039 363
- JP-A- H07 111 873
- JP-A- 2010 116 344
- US-A1- 2008 286 437
- SARICOBAN C. ET AL.: 'The effect of different levels of sunflower head pith addition on the properties of model system emulsions prepared from fresh and frozen beef.' MEAT SCI. vol. 4, no. 1, 08 January 2010, pages 186 - 95, XP026684021
- DATABASE CAPLUS [Online] AMERICAN CHEMICAL SOCIETY STN Database accession no. 2011:1660668 & BAYRAK, E.. ET AL.: 'The effect of different levels of sunflower head pith powder on some emulsion attributes of mechanically deboned chicken meat' JOURNAL OF FOOD SCIENCE AND ENGINEERING vol. 1, no. 3, 2011, pages 166 - 70, XP055252708
- MARECHAL V. ET AL.: 'Characterization of by- products of sunflower culture -- commercial applications for stalks and heads' IND.CROPS PROD. vol. 10, no. 3, 1999, pages 185 - 200, XP 055252437

## Description

### Technical field

The present invention relates to the utilization of strong water and moisture holding property and oil and fat holding property; that is to say, the binding effects of lipophilic pith fibers (ground stem or stalk internal fibers) separated from sunflower stems or stalks as plant fibers. The present invention enables production of secure and safe processed meat products having juiciness and elasticity, such as processed meat, noodles, chicken sausages for which it is particularly difficult to bind meat, and fish paste products. The present invention also enables production of noodles having lasting springiness, sweets having balanced and uniform tastes, and so on.

### Background Art

Phosphate, which is a food additive, is used as a binder in order to improve tissues of products such as processed meat, noodles, and fish paste products and prevent deterioration of quality of the products and exudation from the products upon thawing. However, for example, accumulation of phosphate in the living body may cause osteoporosis, renal disorder, muscle atrophy, and other diseases. In addition, nitrite is used as a color former. However, nitrite is problematic because when it reacts with amine, a carcinogenic reaction product is formed. In this regard, under the regulations of the Ministry of Health, Labour and Welfare, restrictions are placed on processed meat such that it must have a nitrous acid level of 70 PPM or less. Although so-called phosphate-free and/or salting (nitrite-free) hams and sausages, which contain no such additives, are available, there are few products having desirable mouthfeel because natural binders have weak binding effects. A natural binder that can solve such problems has been expected.

Even in Germany, known as the best location for authentic hams and sausages, many papers have been continuously published on the production of a nitrite- and phosphate-free natural binder, which has long been a popular theme. Production of desirable phosphate-free and salting (nitrite-free) hams and sausages has been awaited throughout the world.

Various dietary fibers exist, such as crystallized cellulose, indigestible dextrin, bran, *okara* (bean curd refuse), and beet fibers. However, there are few dietary fibers that can function as lipophilic dietary fibers. Among them, only beet fibers are characterized by oil and fat holding property and exudation preventing property. In addition, a finely processed crystallized cellulose product with a size of 20 µm or less, which has an increased surface area that imparts absorption capacity, is specified as being capable of preventing exudation. When the content of other dietary fibers is increased, the result is in very poor mouthfeel due to undesirable dryness. There is a demand for lipophilic dietary fibers having binding effects that do not impair mouthfeel.

As a result of research on patent publications of related technologies, it was found that Patent Document 1 discloses that "it is possible to use, as a binder (for chicken), a binder such as starch, wheat flour, cornmeal, plant protein, milk protein, or egg protein." In addition, JP Patent Publication (Kokai) No. 2011-250780 A (Patent Document 2) discloses that arginine is used in order to improve the binding effects of phosphate upon chicken.

Further, Patent Document 3 discloses that a complex comprising finely processed cellulose and a gelatinizing agent has significantly improved synergetic effects of preventing water separation and improving water and moisture holding property compared with the effects obtained with the independent use of cellulose and a gelatinizing agent.

However, the above disclosures are not sufficient to support the improvement of binding effects upon chicken.

Meanwhile, 12,000,000 tons of sunflower cooking oil and 32,000,000 tons of sunflower seeds are distributed throughout the world. However, only "King's American Dispensatory" (1898, the U.S.) describes that sunflower pith fibers, which are stem or stalk internal fibers, have medicinal actions such as diuretic action, antipyretic action, and decongestive action when they are brewed. At present, sunflower stems or stalks are mixed with green manure throughout the world. Therefore, the effective utilization of sunflower stems or stalks contributes greatly to the resolution of resource issues.

Patent documents relating to sunflower are as examined as follows. JP Patent Publication (Kokai) No. 2005-60366 A (Patent Document 4) describes "an agent for accelerating lipolysis, comprising as an active ingredient a plant selected from common juniper, ···sunflower···knotgrass (*Polygonum aviculare*), or an extract thereof." Also, JP Patent Publication (Kokai) No. 2009-242432 A (Patent Document 5) describes "an agent for accelerating lipolysis, comprising as an active ingredient a plant selected from *togenashi* (*Rosa roxburghii*), ···sunflower, ···knotgrass (*Polygonum aviculare*), or an extract thereof." Both documents describe that in the case of sunflower, seeds are preferably used.

Moreover, JP Patent Publication (Kohyo) No. 2002-504359 A (Patent Document 6) describes a method for producing a fat mixture for decreasing cholesterol, wherein sunflower oil is used as a type of oil. Furthermore, JP Patent Publication (Kokai) No. 2006-22068 A (Patent Document 7) describes the invention of a nutrient composition for improvement of serum lipid metabolism, wherein high oleic sunflower oil is used.

JP Patent Publication (Kohyo) No. 2006-517222 A (Patent Document 8) describes oil enriched with diacylglycerol and phytosterol ester, such as sunflower oil used for decreasing cholesterol and triglyceride.

CN 102 742 855 describes the use of sunflower seed meal as a water-retaining agent for meat processing.

Saricoban et al. (2010) Meat Sci. 4(1): 186-95 and Bayrak et al. (2011) Journal of Food Science and Engineering 1(3):166-70 describe the use of sunflower head pith in processed chicken or beef.

However, none of the documents discloses or suggests the use of sunflower pith (stem or stalk internal portion).

The present inventor has discovered that lipids are also present in the sunflower stem or stalk portions through a test on paper pulp. In particular, the present inventor has focused on the fact that fats and oils that are finally stored in seeds or raw materials thereof are transported to a stem or stalk internal portion (pith) via the interior of the stem or stalk (pith). The present inventor has determined that the lipophilic functions of the stem or stalk internal portion of sunflower can be expected to exhibit slimming effects, as a raw material for food, by effectively utilizing the lipophilic functions. Thus, the present inventor has conducted experiments and has previously applied for a patent (JP Patent Publication (Kokai) No. 2011-1115 A (Patent Document 9)).

### Citation List

### Patent Documents

Patent Document 1: JP Patent Publication (Kokai) No. 2012-000066 A
Patent Document 2: JP Patent Publication (Kokai) No. 2011-250780 A
Patent Document 3: WO98/17126 A
Patent Document 4: JP Patent Publication (Kokai) No. 2005-60366 A
Patent Document 5: JP Patent Publication (Kokai) No. 2009-242432 A
Patent Document 6: JP Patent Publication (Kohyo) No. 2002-504359 A
Patent Document 7: JP Patent Publication (Kokai) No. 2006-22068 A
Patent Document 8: JP Patent Publication (Kohyo) No. 2006-517222 A
Patent Document 9: JP Patent Application No. 2011-1115

### Summary of the Invention

### Problem to be Solved by the Invention

An object of the present invention is to utilize strong water and moisture holding property and oil and fat holding property-that is to say, binding effects-of pith fibers (ground stem or stalk internal fibers) separated from sunflower stems or stalks, which are natural products, in order to enhance binding capacity of processed meat products, and especially processed chicken products. Another object of the present disclosure is to apply the use of the pith fibers to other processed foods, such as noodles and sweets.

### Means for Solving the Problem

The present inventor found that lipophilic pith fibers (ground stem or stalk internal fibers) separated from sunflower stems or stalks have strong water and moisture holding property and oil and fat holding property; that is to say, binding effects. Accordingly, the present inventor developed a natural binder capable of imparting elasticity to processed meat, noodles, chicken sausages for which it is particularly difficult to bind meat, and fish paste products.

Specifically, the present invention provides (1) a processed meat product, comprising ground pith fibers separated from sunflower stems or stalks; and (2) the use of ground pith fibers separated from sunflower stems or stalks in a processed meat product as a natural binder.

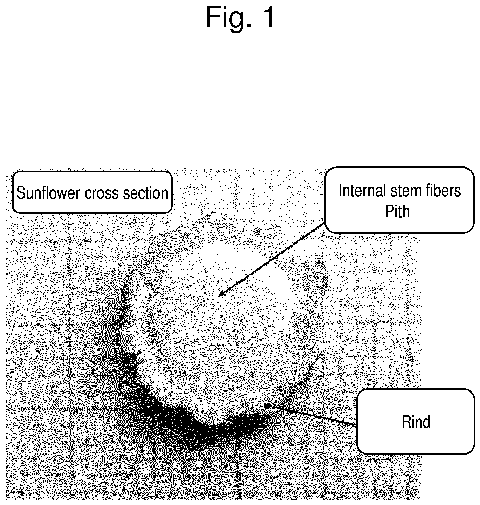

Use of the stem or stalk portions of many fast growing plants on earth is problematic in terms of the high cost required for drying to remove moisture accounting for nearly 70%-90% of the stem or stalk portions and the resulting high cost for grinding. Sugarcane or sweet sorghum (Sorghum bicolor) with a high sugar content is merely industrially cultivated to obtain stems or stalks. However, the present inventor has discovered that even sunflower, from which no sugar can be expected, can be used by separating a sunflower plant into the rind portion and the stem or stalk internal portion (pith) using a cane separator, drying the stem or stalk internal portion using a vacuum drying apparatus or a general drying system (e.g., solar drying or hot air drying) to result in a moisture content suitable for grinding (preferably 8% or less), and then using the lipophilic property of the thus dried stem or stalk internal portion (pith) (see Fig. 1).

Sunflower pith fibers can be extracted by separating rind portions of the epidermis from pith (interior tissue) using a separation apparatus such as a cane separation system (AmClyde, U.S.A. U.S. patent No. 3690358) as shown in Fig. 2 and grinding pith using a conventional grinder such as a hammer mill to a size of 1 mm or less.

According to the present disclosure, sweets include confectionery supplements as well as so-called confectioneries such as cookies, sponge cake, and chocolate. In addition, the noodles of the present disclosure include not only *soba* noodles (thin Japanese noodles made from buckwheat flour) and *udon* noodles (thick Japanese noodles made from all-purpose flour) but also *ramen* noodles (noodles used in Asian cooking) and pasta.

### Effects of the Invention

The present invention enables production of secure and safe processed meat products having juiciness and elasticity, such as processed meat, noodles, chicken sausages for which it is particularly difficult to bind meat, and fish paste products. The present disclosure also enables production of noodles having lasting springiness, sweets having balanced and uniform tastes, and so on.

### Brief Description of the Drawings

Fig. 1 is a photo showing a cross section of sunflower.

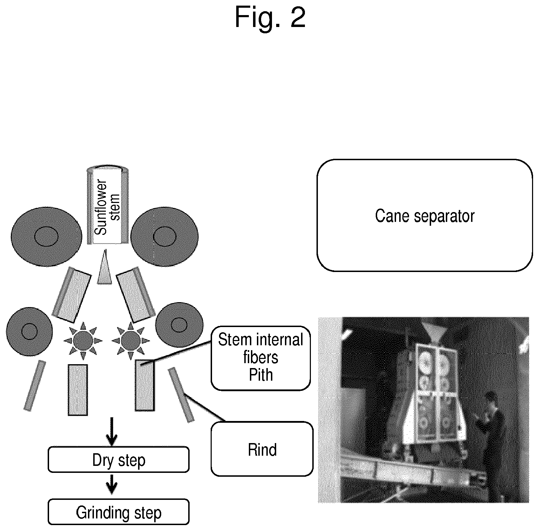

Fig. 2 shows a cane separation system.

### Embodiments for Carrying out the Invention

Hereinafter, the present invention is more specifically described using Examples, but the scope of the present invention is not limited to these Examples.

### Examples

### [Example 1] Chicken sausage models for water separating rate test

Chicken sausages were produced with the composition ratios shown in Table 1. Each sausage was heated at 70°C for 20 minutes, cooled, and then separated by centrifugal force at 3000 x g to determine the water separating rate.

1. No addition of sunflower pith fibers: 69% (the amount of water separated: 6.1 g; the amount of water held: 2.75 g)
2. Addition of 0.05 g of sunflower pith fibers: 59% (the amount of water separated: 5.2 g; the amount of water held: 3.6 g)
3. Addition of 0.15 g of sunflower pith fibers: 51% (the amount of water separated: 4.4 g; the amount of water held: 4.3 g)

The above results show that the addition of sunflower pith fibers causes a decrease in the water separating rate; that is to say, it improves the water holding rate.

**[Table 1]**

| | 1 | 2 | 3 |
|---|---|---|---|
| Chicken | 1.0 g | 1.0 g | 1.0 g |
| Sodium chloride | 0.15 g | 0.15 g | 0.15 g |
| Sunflower pith fibers | | 0.05 g | 0.15 g |
| Water | 8.85 g | 8.8 g | 8.7 g |
| Total | 10.0 g | 10.0 g | 10.0 g |

Sunflower pith fibers were analyzed at the Association of Meat Science & Technology Institute. As a result, polymeric phosphate was not found and the amount of nitrous acid was as low as 1.9 ppm/100 g. This proves that the sausages containing sunflower pith fibers substantially did not include phosphate, which can serve as a binder, or natural nitrous acid, which suggests the presence of potassium nitrite or the like as a color former.

### [Example 2] Oil and fat holding property test

Sunflower pith fibers (less than 1 mm in length) and commercially available beet fibers specified as having oil and fat holding property and being capable of preventing exudation in its item description (less than 150 µm, Nippon Beet Sugar Manufacturing Co., Ltd.) were added to a 50-mL centrifugation tube to a graduation line corresponding to a volume of 20 ml. Further, high oleic safflower oil was added to fill the 50-mL centrifugation tube to the top. The mixture was stirred well and separated by a centrifuge via centrifugal force at 1000 x g for 10 minutes to measure the amount of oil and fat separated. The oil and fat holding rates relative to the weights of the respective fiber weights were calculated.

**[Table 2]**

| Oil and fat absorbing and holding property test results | | | | | | |
|---|---|---|---|---|---|---|
| No. | Product name | Test tube g | Sample + Test tube | Weight after centrifugation | Oil and fat absorbing and holding rate % | Average |
| | | A | B | C | ((C-A)/B-1) x 100 | |
| 1 | Sunflower pith fibers | 11.951 | 0.129 | 13.617 | 1191% | 1208% |
| 2 | Sunflower pith fibers | 11.909 | 0.128 | 13.605 | 1225% | |
| 3 | Beet fibers | 11.924 | 0.944 | 13.957 | 115% | 115% |

As is apparent from Table 2, sunflower pith fibers less than 1 mm in length had an average oil and fat absorbing and holding rate of 1208%, while beet fibers less than 150 µm in length had an oil and fat absorbing and holding rate of 115%, meaning that the oil and fat absorbing and holding rate of the former is 10 times or more that of the latter. That is, it was demonstrated that sunflower pith fibers have oil and fat holding property even when they are not finely cut.

### [Example 3] Production of chicken sausages

Chicken sausages were produced with the addition of sunflower pith fibers.

The composition ratio is described below.

| | |
|---|---|
| Chicken | 100 parts |
| Salt | 2.5 parts |
| Sugar | 1 part |
| Fish sauce | 0.7 parts |
| Spices | 1.5 parts |
| Seaweed powder | 3 parts |
| Sunflower pith fibers | 0.06 parts |

The production steps were carried out in the following order.

```
           Marinate meat with salt and sugar.
                ↓
           Grind marinated meat with a chopper.
                ↓
           Add seasonings into a mixer, add sunflower pith fibers, and knead
           the mixture well.
                ↓
           Stuffing
                ↓
           Drying and smoking
                ↓
           Boiling
                ↓
           Cooling
                ↓
           Packaging
                ↓
           Sterilization
                ↓
           Storage
```

As a result, commercially competitive pork, chicken, and fish meat sausages having adequate firmness and elasticity were successfully produced.

For chicken sausages, the amount of sunflower pith fibers added is preferably 0.03% to 0.3% of the total amount of chicken sausage. Meanwhile, for refrigerated meat, comparable results were obtained by increasing the amount of sunflower pith fibers to 0.1-1.0 parts.

### [Example 4] Test for comparison of sunflower pith fibers and beet fibers

Hamburger containing 1 % of sunflower pith fibers was compared with hamburger containing 1 % of beet fibers.

Hamburger containing sunflower pith fibers showed elasticity and uniformity by harmony, while on the other hand, hamburger containing beet fibers had cracks and mouthfeel such as dryness. Small amounts of exudate were absorbed by kitchen paper in both cases, showing that there was no difference therebetween. A sensory test was performed by eight panelists. They all had the same opinion.

Dumplings containing 0.3% of sunflower pith fibers and dumplings containing 0.3% of beet fibers were prepared and compared.

Dumplings containing sunflower pith fibers were juicy, while on the other hand, dumplings containing beet fibers had mouthfeel such as dryness. A sensory test was performed by eight panelists. They all had the same opinion.

That is, it was found that sunflower pith fibers are superior to beet fibers as additives when they are added to foods.

### [Example 5] Binding effects on noodles

Noodles were prepared with all-purpose flour, buckwheat flour, and, as a binder, sunflower pith fibers (the content in noodles: 0.3%). The obtained *udon* noodles and *soba* noodles had desirable mouthfeel, such as springiness, and a glossy appearance. A sensory test was performed by eight panelists. They all had the opinion that springiness was an unconventional texture and the taste was very delicious. Thus, it was found that sunflower pith fibers provide sufficient binding effects even when used for a food containing no fats and oils.

*Soba* noodles prepared above were left for 30 minutes. As a result, water separation was observed in the *soba* noodles containing no sunflower pith fibers, which caused blocking and then a so-called sticking phenomenon. However, the *soba* noodles containing sunflower pith fibers remained glossy and the sticking phenomenon did not occur. It was determined that sunflower pith fibers have water and moisture holding property and binding capacity.

### [Example 6] Effects of preventing exudation

Butter rich cookies with the following composition ratio were produced.

Cookies were made with wheat flour (100), butter (90), sugar (30), and eggs (30) with or without the addition of a teaspoon of sunflower pith fibers (0.3). The cookies were placed on cooking paper and compared in terms of exudation. The amount of exudate from the cookies containing sunflower pith fibers decreased to about two-thirds that of the cookies containing no sunflower pith fibers. That is, sunflower pith fibers were confirmed to be effective in preventing exudation.

### [Example 7] Expansion, heat conductivity, and the effects of reducing cooking time

Butter-free sponge cake was made with wheat flour (100), eggs (30), and sugar (30) with or without the addition of a teaspoon of sunflower pith fibers (0.3) for a comparison test.

The product containing sunflower pith fibers expanded to a size 10%-15% greater than that of the product containing no sunflower pith fibers. Heat conductivity was higher and cooking time was shorter in the former case than in the latter case. All food taste testers (6 persons) evaluated the product containing sunflower pith fibers as providing mouthfeel such as wetness. Three out of the six food taste testers evaluated the product containing sunflower pith fibers as providing a sweeter taste than that of the product containing no sunflower pith fibers.

### [Example 8] Dispersion effects for ganache

Ganache was made with chocolate (100), cream (80), and starch syrup (30) with or without the addition of sunflower pith fibers (0.5) for comparison.

As a result, the product containing sunflower pith fibers was superior to the product containing no sunflower pith fibers in terms of the ease of mixing and reduction of cooking time. All food taste testers (6 persons) evaluated the product containing sunflower pith fibers as providing an overall melt-in-the-mouth texture, uniformity, and improved sweetness.

In the case of chocolate production, chocolate is required to have a constant and uniform taste. Also, the all food taste testers (6 persons) evaluated sunflower pith fibers as having effects of capsulating oil and moisture and increasing dispersibility to allow capsulated flavor components to be released in the mouth for enhancement of a delicious taste.

### [Example 9] Chicken sausages

In general, it is thought to be difficult to prepare processed chicken breast without the use of polymeric phosphate as a binder, which is harmful to the human body. Here, chicken sausages were produced with the compositions containing chicken breast (100% and 50%) and sunflower pith fibers shown in Table 3 below. As a result, the obtained chicken sausages all had firmness and elasticity.

**[Table 3]**

| Chicken | 100% (chicken breast: 50%) | 100% chicken breast |
|---|---|---|
| Mineral salt | 2.5 | 2.5 |
| Sunflower pith fibers | 0.3 | 0.5 |
| Spices | 0.8 | 0.8 |
| Uncentrifuged sugar | 0.4 | 0.4 |

Even after they were boiled at 120°C for 4 minutes for retort sterilization, the obtained sausages maintained a sufficiently appropriate firmness and elasticity; that is to say, the sausages had desirable mouthfeel.

Accordingly, it was confirmed that the use of sunflower pith fibers allowed establishing the period before the date of minimum durability as 6 months or longer than for that of phosphate-free sausages which has the period before the date of minimum durability as usually short (2 weeks to 1 month). This is probably because thermal resistance (melting point: 230°C) of cellulose contained as a main ingredient in the ground sunflower pith fibers was effective for suppressing the thermal denaturation of included protein. Meanwhile, in the case of sausages processed with phosphate having binding capacity, thermal denaturation of the protein took place during the retort process, which caused the sausages to become as soft as commercially available canned sausages and to have reduced elasticity and a poor texture.

Retort-processed 100% chicken breast sausages were compared with JAS-certified sausages for texture measurement at the Association of Meat Science & Technology Institute.

**[Table 4]**

| Bite measurement results | Plunger area cm² | Firmness N/m² | Adhesiveness J/m² | Cohesion | Chewiness N/m² | Elasticity (%) |
|---|---|---|---|---|---|---|
| JAS-certified sausage | 7.1 | 41777 | | 0.689 | 28617 | 89.8 |
| Chicken breast sausage | 7.1 | 45903 | | 0.689 | 31553 | 90.2 |
| JAS-certified sausage | 0.2 | 138867 | 13.4 | 0.475 | 55547 | 94.6 |
| Chicken breast sausage | 0.2 | 276367 | 1.0 | 0.648 | 179400 | 92.3 |

### Method

Samples were made by cutting sausages in round slices with a thickness of 1 cm. The samples were left to stand still for 1 hour at room temperature (22°C) before measurement. Measurement was conducted by the two-bite method, in which a load is applied to each sample two times. Two types of plungers were used. A plunger having a cross sectional area (7.1 cm²) larger than the sausage cross sectional area was used for applying a load to press the entire surface of the sausage sample. Meanwhile, a plunger having a cross sectional area (0.2 cm²) smaller than the sausage cross sectional area was used for partially applying a load to the surface of the sausage sample. Other measurement conditions were as follows: bite speed: 2 mm/sec; and clearance: 5 mm.

As control samples, JAS-certified sausages were subjected to measurement in the above manner.

The term "adhesiveness" used herein refers to adhesion of a food inside the oral cavity. The term "cohesion" used herein refers to the internal binding strength of a food. The term "chewiness" refers to energy required to chew a food to an extent such that the food can be swallowed. The term "elasticity" used herein refers to a property of a food whether it is restored to its original shape after deformation caused by an external force when the external force is released.

### Results

The results shown in Table 4 suggest the following 1 to 3.
1. In cases in which a load was applied to the entire surface of a sausage sample (plunger area: 7.1 cm²), the chicken breast sausages were found to have firmness and chewiness superior to those of the JAS-certified sausages. The cohesion and elasticity of the former were comparable to those of the latter.
2. In cases in which a load was partially applied to the surface of a sausage sample (plunger area: 0.2 cm²), the chicken breast sausages were found to have firmness and chewiness superior to those of the JAS-certified sausages. The adhesiveness of the former was weaker than that of the latter, while the elasticity of the former was comparable to that of the latter.
3. Accordingly, it is considered that the above chicken breast sausages have a sausage texture. As a result of a comparison of the chicken breast sausages with the JAS-certified sausages, it is considered that the chicken breast sausages have a firm texture when they are classified as general fine-cut sausages.

### Sensory test: A sensory test was conducted by three sensory panelists.

The three panelists judged that the chicken breast sausages had a normal appearance (color, shape) and favorable firmness as mouthfeel but did not have the unpleasant odor specific to chicken. Regarding the taste, the three panelists perceived a moderate salty taste.

Accordingly, it was confirmed that when sunflower pith fibers are added according to the present invention, safe (healthy) sausages having adequate firmness and excellent elasticity can be produced, and the period before the date of minimum durability can be extended.

## Claims

1. A processed meat product, comprising ground pith fibers separated from sunflower stems or stalks.

2. The processed meat product according to claim 1, which is free of polymeric phosphate.

3. The processed meat product according to claim 1 or claim 2, which is a ham or sausage.

4. The processed meat product according to claim 3, which is a sausage.

5. The processed meat product according to claim 4, which is a chicken sausage.

6. Use of ground pith fibers separated from sunflower stems or stalks in a processed meat product as a natural binder.

7. Use according to claim 6, wherein the ground pith fibers are used in place of polymeric phosphate.

8. Use according to claim 6 or claim 7, wherein the processed meat product is a ham or sausage.

9. Use according to any one of claims 6 to 8, wherein the processed meat product is a sausage.

10. Use according to any one of claims 6 to 9, wherein the processed meat product is a chicken sausage.

## Patentansprüche

1. Fleischwarenprodukt, das zerkleinerte Markfasern umfasst, die von Sonnenblumenstielen oder -stängeln abgetrennt wurden.

2. Fleischwarenprodukt nach Anspruch 1, das frei von polymerem Phosphat ist.

3. Fleischwarenprodukt nach Anspruch 1 oder Anspruch 2, das ein Schinken oder eine Wurst ist.

4. Fleischwarenprodukt nach Anspruch 3, das eine Wurst ist.

5. Fleischwarenprodukt nach Anspruch 4, das eine Hühnerwurst ist.

6. Verwendung von zerkleinerten Markfasern, die von Sonnenblumenstielen oder -stängeln abgetrennt wurden, als natürliches Bindemittel in einem Fleischwarenprodukt.

7. Verwendung nach Anspruch 6, wobei die zerkleinerten Markfasern anstelle von polymerem Phosphat eingesetzt werden.

8. Verwendung nach Anspruch 6 oder Anspruch 7, wobei das Fleischwarenprodukt ein Schinken oder eine Wurst ist.

9. Verwendung nach einem der Ansprüche 6 bis 8, wobei das Fleischwarenprodukt eine Wurst ist.

10. Verwendung nach einem der Ansprüche 6 bis 9, wobei das Fleischwarenprodukt eine Hühnerwurst ist.

## Revendications

1. Produit de viande transformé comprenant des fibres de médulle broyée séparées des tiges ou des queues de tournesol.

2. Produit de viande transformé selon la revendication 1, qui est exempt de phosphate polymère.

3. Produit de viande transformé selon la revendication 1 ou la revendication 2, qui est un jambon ou une saucisse.

4. Produit de viande transformé selon la revendication 3, qui est une saucisse.

5. Produit de viande transformé selon la revendication 4, qui est une saucisse de poulet.

6. Utilisation de fibres de médulle broyée séparées des tiges ou des queues de tournesol dans un produit de viande transformé en tant que liant naturel.

7. Utilisation selon la revendication 6, dans laquelle les fibres de médulle broyée sont utilisées à la place d'un phosphate polymère.

8. Utilisation selon la revendication 6 ou la revendication 7, dans laquelle le produit de viande transformé est un jambon ou une saucisse.

9. Utilisation selon l'une quelconque des revendications 6 à 8, dans laquelle le produit de viande transformé est une saucisse.

10. Utilisation selon l'une quelconque des revendications 6 à 9, dans laquelle le produit de viande transformé est une saucisse de poulet.
